# EUROPÄISCHE PATENTANMELDUNG

(11) **EP 0 889 536 A1**
(43) Veröffentlichungstag der Anmeldung: **07.01.1999**
(21) Anmeldenummer: 97111207.3
(22) Anmeldetag: 03.07.1997
(51) Int. Cl.: H01M 8/02

(54) **Metallische bipolare Platte für Hochtemperatur-Brennstoffzellenstapel**

(71) Anmelder: SIEMENS AKTIENGESELLSCHAFT, 80333 München (DE)
(72) Erfinder: Greiner, Horst, 91301 Forchheim (DE); Kempster, Adrian, Hatfield, Hertfordshire AL9 5JW (GB)

(57) **Zusammenfassung**

Bei der vorliegenden Hochtemperatur-Brennstoffzelle (4,5) mit wenigstens einer chromhaltigen Verbundleiterplatte (6), die auf der der Kathode (6) zugewandten Oberfläche (16) wenigstens teilweise eine Schicht (28) aufweist, umfaßt die Schicht (28) wenigstens eine erste und eine zweite Lage (30,32). Die erste, auf der Oberfläche (16) der Verbundleiterplatte (6) angeordnete Lage (30), enthält Nickel (Ni) und die darüber angeordnete zweite Lage (32) Aluminium (Al). Durch diese Maßnahme wird das Verdampfen von chromhaltigen Verbindungen aus der Verbundleiterplatte (6) weitgehend vermieden.

## Beschreibung

Die Erfindung bezieht sich auf eine Hochtemperatur-Brennstoffzelle und auf einen Hochtemperatur-Brennstoffzellenstapel.

Es ist bekannt, daß bei der Elektrolyse von Wasser die Wassermoleküle durch elektrischen Strom in Wasserstoff (H₂) und Sauerstoff (O₂) zerlegt werden. In einer Brennstoffzelle läuft dieser Vorgang in umgekehrter Richtung ab. Durch die elektrochemische Verbindung von Wasserstoff (H₂) und Sauerstoff (O₂) zu Wasser entsteht mit hohem Wirkungsgrad elektrischer Strom. Dies geschieht, wenn als Brenngas reiner Wasserstoff (H₂) eingesetzt wird, ohne Emission von Schadstoffen und Kohlendioxid (CO₂). Auch mit einem technischen Brenngas, beispielsweise Erdgas oder Kohlegas, und mit Luft (die zusätzlich mit Sauerstoff (O₂) angereichert sein kann) anstelle von reinem Sauerstoff (O₂) erzeugt eine Brennstoffzelle deutlich weniger Schadstoffe und weniger Kohlendioxid (CO₂) als andere Energieerzeuger, die mit fossilen Energieträgern arbeiten. Die technische Umsetzung des Prinzips der Brennstoffzelle hat zu unterschiedlichen Lösungen, und zwar mit verschiedenartigen Elektrolyten und mit Betriebstemperaturen zwischen 80 °C und 1000 °C, geführt.

In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen unterscheiden.

Bei dem aus einer Vielzahl von Hochtemperatur-Brennstoffzellen sich zusammensetzenden Hochtemperatur-Brennstoffzellenstapel (in der Fachliteratur wird ein Brennstoffzellenstapel auch "Stack" genannt) liegen unter einer oberen Verbundleiterplatte, welche den Hochtemperatur-Brennstoffzellenstapel abdeckt, der Reihenfolge nach wenigstens eine Schutzschicht, eine Kontaktschicht, eine Elektrolyt-Elektroden-Einheit, eine weitere Kontaktschicht, eine weitere Verbundleiterplatte, usw.

Die Elektrolyt-Elektroden-Einheit umfaßt zwei Elektroden und einen zwischen den beiden Elektroden angeordneten, als Membran ausgeführten Festelektrolyten. Dabei bildet jeweils eine zwischen benachbarten Verbundleiterplatten liegende Elektrolyt-Elektroden-Einheit mit den beidseitig an der Elektrolyt-Elektroden-Einheit unmittelbar anliegenden Kontaktschichten eine Hochtemperatur-Brennstoffzelle, zu der auch noch die an den Kontaktschichten anliegenden Seiten jeder der beiden Verbundleiterplatten gehören. Dieser Typ und weitere Brennstoffzellen-Typen sind beispielsweise aus dem "Fuel Cell Handbook" von A. J. Appleby und F. R. Foulkes, 1989, Seiten 440 bis 454, bekannt.

Die metallischen Verbundleiterplatten in der Hochtemperatur-Brennstoffzelle (und damit auch die im Hochtemperatur-Brennstoffzellenstapel) bestehen vorzugsweise aus einer Eisenbasislegierung oder einer Chrombasislegierung (bei einer Basislegierung besteht der Werkstoff zu wenigstens 50 Gew.-% aus dem in der Basislegierung genannten Element). Aufgrund der hohen Betriebstemperatur (von beispielsweise über 600 °C) beim Betrieb der Hochtemperatur-Brennstoffzelle ist die Zusammensetzung der jeweiligen Basislegierung dergestalt zusammenzusetzen, daß sich während des Betriebes eine Korrosionsschutzschicht auf der der Kathode zugewandten Oberfläche der Verbundleiterplatte bildet. Es kommt beispielsweise eine Korrosionsschutzschicht aus Chromoxid (Cr₂O₃) in Betracht, da diese neben der Schutzwirkung auch noch eine ausreichende elektrische Leitfähigkeit aufweist.

Wenn der Werkstoff der Verbundleiterplatte größere Mengen Chrom enthält (z.B. aus einer Chrombasislegierung besteht), bildet sich die Korrosionsschutzschicht der Verbundleiterplatte bereits schon bei sehr niedrigen Sauerstoffpartialdrücken. Dies hat jedoch den unerwünschten Nebeneffekt, daß flüchtige Chromverbindungen aus der Verbundleiterplatte abdampfen können. Dadurch wird die Funktionsfähigkeit der Hochtemperatur-Brennstoffzelle beeinträchtigt und damit auch die Leistungsfähigkeit des gesamten Hochtemperatur-Brennstoffzellenstapels. Die Einschränkung der Leistungsfähigkeit ist hier durch Alterungseffekte in den Elektroden der Elektrolyt-Elektroden-Einheit bedingt.

Aus der deutschen Patentschrift 44 10 711 ist eine Verbundleiterplatte aus einer Chrombasislegierung bekannt, die auf ihrer der Kathode (d.h. auf der sauerstoffführenden Seite) zugewandten Seite eine Schutzschicht aus Aluminiumoxid (Al₂O₃) aufweist. Diese Schutzschicht wird unmittelbar auf die chromhaltige Verbundleiterplatte aufgetragen, mit dem Ziel, daß flüchtige Chromverbindungen nun nicht mehr aus der Verbundleiterplatte abdampfen können.

Versuche haben jedoch gezeigt, daß Anteile der aufgedampften Schutzschicht aus Aluminiumoxid (Al₂O₃) nach dem Auftragen in den Werkstoff der Verbundleiterplatte eindiffundieren. Aufgrund dieses Materialschwunds in der Schutzschicht verliert diese ihre schützende Wirkung gegen das Verdampfen von chromhaltigen Verbindungen aus der Verbundleiterplatte. In der Schutzschicht sind Rißbildungen zu beobachten (die Porosität der Schutzschicht nimmt im starken Maße zu), welche ein Abdampfen der chromhaltigen Verbindungen aus der Verbundleiterplatte ermöglichen. Der gewünschte Effekt, daß die Schutzschicht aus Aluminiumoxid (Al₂O₃) über eine längere Betriebsdauer das Verdampfen aus der chromhaltigen Verbundleiterplatte unterbindet, ist somit nicht gewährleistet.

Der Erfindung liegt nun die Aufgabe zugrunde, eine Hochtemperatur-Brennstoffzelle und einen Hochtemperatur-Brennstoffzellenstapel dergestalt anzugeben, daß das Verdampfen von chromhaltigen Verbindungen aus einer chromhaltigen Verbundleiterplatte weitgehend vermieden wird.

Bei einer Hochtemperatur-Brennstoffzelle mit wenigstens einer chromhaltigen Verbundleiterplatte, weist die Verbundleiterplatte auf der der Kathode zugewandten Oberfläche wenigstens teilweise eine Schicht auf, die gemäß der Erfindung wenigstens eine erste und eine zweite Lage umfaßt, wobei die erste, auf der Oberfläche der Verbundleiterplatte angeordnete Lage, Nickel (Ni) und die darüber angeordnete zweite Lage Aluminium (Al) enthält.

Durch diese zweilagige Schicht ist gewährleistet, daß ein Verdampfen von chromhaltigen Verbindungen aus der chromhaltigen Verbundleiterplatte weitgehend vermieden wird. Dadurch wird die Funktionsfähigkeit der Hochtemperatur-Brennstoffzelle und zugleich die Leistungsfähigkeit derselbigen verbessert. Die zuerst auf die Oberfläche der Verbundleiterplatte aufgetragenen nickelhaltige Schicht diffundiert teilweise in den chromhaltigen Werkstoff der Verbundleiterplatte ein. Es bildet sich eine stabile (verzahnende) Verbindung zwischen der ersten Lage und der Verbundleiterplatte. Auf diese erste Lage wird darüber die zweite aluminiumhaltige Lage aufgetragen. Da diese entgegen dem Stand der Technik nicht unmittelbar auf die Verbundleiterplatte aufgetragen wird, dringt diese aluminiumhaltige Lage nicht in den Werkstoff der Verbundleiterplatte ein. Die nickelhaltige erste Lage hat praktisch eine sperrende Wirkung gegenüber der aluminiumhaltigen zweiten Lage bezüglich des teilweisen Eindringens (d.h. des Eindiffundierens) in die Verbundleiterplatte. Das Aluminium der zweiten Lage dringt nur noch in die nickelhaltige erste Lage (die sogenannten Sperrlage) ein und wird dort abgebunden. Im Grenzbereich zwischen der nickelhaltigen ersten Lage und der aluminiumhaltigen zweiten Lage (d.h. bis zu einer bestimmten Tiefe in der ersten und der zweiten Lage) bilden sich Mischkristalle aus Aluminium (Al) und Nickel (Ni). Diese Mischkristalle (z.B. Ni₃Al) können zwischen den Schichten eine intermetallische Phase bilden oder als Sekundärausscheidungen in den Schichten eingelagert werden.

Während des Betriebes der Hochtemperatur-Brennstoffzelle bildet sich auf der der Kathode zugewandten Seite der aluminiumhaltigen Lage eine Aluminiumoxidschicht (Al₂O₃). Die zweilagige Schicht verhindert also das Verdampfen von chromhaltigen flüchtigen Verbindungen aus der Verbundleiterplatte.

Vorzugsweise enthält die erste Lage wenigstens 90 Gew.-% Nickel. Dadurch ist gewährleistet, daß die nickelhaltige erste Lage eine gute Haftung auf der Oberfläche der Verbundleiterplatte besitzt und zugleich das Aluminium (Al) aus der aluminiumhaltigen zweiten Lage nicht in die Verbundleiterplatte diffundiert. Das Aluminium wird in der nickelhaltigen ersten Lage gestoppt (mit anderen Worten gesperrt).

Insbesondere kann die erste Lage eine Dicke zwischen 10 und 100 µm besitzen. Dieser Bereich für die Dicke hat sich experimentell zum Verhindern (zum Sperren) der Diffusion von Aluminium aus der zweiten Lage in die Verbundleiterplatte bewährt.

In einer weiteren Ausgestaltung enthält die zweite Lage wenigstens 90 Gew.-% Aluminium und besitzt eine Dicke zwischen 10 und 20 µm. Diese Wertebereiche für die Konzentration und die Dicke der zweiten Lage reichen aus, das Verdampfen von chromhaltigen Verbindungen aus der Verbundleiterplatte zu unterbinden.

Bei der Hochtemperatur-Brennstoffzelle verlaufen in der Regel wenigstens zwei Kanäle nebeneinander in der Oberfläche der Verbundleiterplatten, wobei jeweils zwei Kanäle durch einen Steg voneinander getrennt sind; dabei sind vorzugsweise die Seitenwände und die Böden der Kanäle mit der Schicht versehen. Damit die Schicht elektrisch isolierend wirkt, werden die Oberflächen der Stege nicht mit der Schicht versehen. Durch die Oberflächen der Stege fließt senkrecht zu diesen der elektrische Strom.

Gemäß der Erfindung weist ein Hochtemperatur-Brennstoffzel lenstapel eine Anzahl solcher Hochtemperatur-Brennstoffzellen auf.

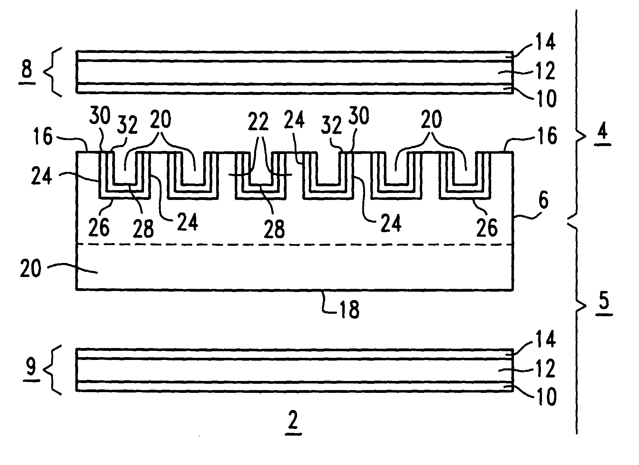

Weitere vorteilhafte Ausgestaltungen sind in den Unteransprüchen wiedergegeben. Zum besseren Verständnis der Erfindung und ihrer Weiterbildungen werden zwei Ausführungsbeispiele anhand einer Figur erläutert. Die Figur zeigt einen Ausschnitt aus einem Hochtemperatur-Brennstoffzellenstapel mit zwei Hochtemperatur-Brennstoffzellen in schematischer Darstellung.

In der Figur erkennt man einen Ausschnitt aus einem Hochtemperatur-Brennstoffzellenstapel 2. Der Ausschnitt umfaßt zwei nicht vollständig dargestellte Hochtemperatur-Brennstoffzellen 4,5 (in der Regel enthält ein Kochtemperatur-Brennstoffzellenstapel wenigstens fünfzig Hochtemperatur-Brennstoffzellen).

Die Hochtemperatur-Brennstoffzellen 4,5 umfassen jeweils in der angegebenen Reihenfolge eine Verbundleiterplatte 6 (innerhalb eines Hochtemperatur-Brennstoffzellenstapels, d.h. nicht an seinen Enden, wird die Verbundleiterplatte 6 auch als bipolare Platte bezeichnet), sowie eine Elektrolyt-Elektroden-Einheit 8,9 und eine weitere nicht dargestellte Verbundleiterplatte. Zwischen den Verbundleiterplatten 6 und den Elektrolyt-Elektroden-Einheiten 8,9 werden in der Regel außerdem noch zusätzliche Kontaktschichten angeordnet.

Die Elektrolyt-Elektroden-Einheiten 8,9 umfassen in der angegebenen Reihenfolge jeweils eine Kathode 10, einen Festelektrolyten 12 und eine Anode 14.

Die Verbundleiterplatte 6 besteht aus einer Chrombasislegierung. In die Oberfläche 16, die der Kathode 10 der Elektrolyt-Elektroden-Einheit 8 zugewandt ist, und in die Oberfläche 18, die der Anode 14 der Elektrolyt-Elektroden-Einheit 9 zugewandt ist, sind parallel zueinander verlaufende Kanäle 20 eingearbeitet. Jeweils zwei parallel zueinander verlaufende Kanäle 20 sind durch einen Steg 22 voneinander getrennt. In den Kanälen 20 werden Betriebsmittel zum Betreiben des Hochtemperatur-Brennstoffzellenstapels 2 geführt. In den Kanälen 20, die der Kathode 10 der Elektrolyt-Elektroden-Einheit 8 zugewandt sind, wird beispielsweise Sauerstoff (O₂) geführt, wohingegen in den Kanälen 20, die der Anode 14 der Elektrolyt-Elektroden-Einheit 9 zugewandt sind, Wasserstoff (H₂) geführt wird.

Die Kanäle 20 in der Oberfläche 16 sind auf ihren Seitenflächen 24 und auf ihren Böden 26 mit einer zweilagigen Schicht 28 versehen. Die Schicht 28 umfaßt eine erste Lage 30 und eine zweite Lage 32. Die erste Lage 30 enthält Nickel (Ni) und ist unmittelbar auf der Oberfläche 16 (genauer: auf den Seitenflächen 24 und den Böden 26 der Kanäle 20) angeordnet. Die zweite Lage 32 ist über der ersten Lage 30 angeordnet und enthält Aluminium (Al).

In einem weiteren nicht dargestellten Ausführungsbeispiel sind auch die Stege 22 auf ihren Oberflächen mit der Schicht 28 versehen. Eine Maske (zum Abdecken der Oberflächen der Stege 22) wird dann nicht mehr benötigt. Allerdings muß die nichtleitende Schicht 28 in einem weiteren Schritt von den Oberflächen der Stege 22 entfernt werden.

Mit der Schicht 28 wird nun erreicht, daß während des Betriebes des Hochtemperatur-Brennstoffzellenstapels 2 (und damit der Hochtemperatur-Brennstoffzellen 4,5) das Verdampfen von chromhaltigen Verbindungen aus der Verbundleiterplatte 6 verhindert wird.

Die erste Lage 30 enthält wenigstens 90 Gew.-% Nickel (Ni) und besitzt vorzugsweise eine Dicke zwischen 10 und 100 µm. Die zweite Lage 32 enthält wenigstens 90 Gew.-% Aluminium (Al) und weist insbesondere eine Dicke zwischen 10 und 20 µm auf. Der Werkstoff der nickelhaltigen ersten Lage 30 dringt teilweise in die Oberfläche 16 (d.h. hier in die Seitenwände 24 und die Böden 26) der Kanäle 20 ein und gewährleistet eine stabile (verzahnende) Verbindung zwischen der Verbundleiterplatte 6 und der aluminiumhaltigen zweiten Lage 32. Die erste Lage 30 verhindert das Eindringen (das Hineindiffundieren) des Aluminiums (Al) der aluminiumhaltigen zweiten Lage 32 in die Verbundleiterplatte 6 (die erste Lage 30 hat also die Funktion einer Sperrschicht für das Aluminium (Al)).

Das Aluminium (Al) dringt nun nur noch in die erste Lage 30 ein und bildet mit dem Nickel (Ni) der ersten Lage 30 einen Mischkristall (eine intermetallische Phase zwischen den Metallen Nickel (Ni) und Aluminium (Al)).

Die zweilagige Schicht 28, die die erste Lage 30 und die zweite Lage 32 umfaßt, weist eine glatte feinporige Oberfläche aus. Während des Betriebes bildet sich an der der Kathode 10 zugewandten Oberfläche der zweiten Lage 32 eine Aluminiumoxid (Al₂O₃)-Schicht. Das Verdampfen von chromhaltigen Verbindungen aus der chromhaltigen Verbundleiterplatte 6 wird wahrend des Betriebes des Hochtemperatur-Brennstoffzellenstapels 2 weitgehend vermieden. Dadurch kommt es nicht zu Alterungserscheinungen in den Kathoden 10 der Elektrolyt-Elektroden-Einheiten 8,9.

Eine Funktionseinschränkung des Hochtemperatur-Brennstoffzellenstapels 2 aufgrund der Verdampfung von chromhaltigen Verbindungen aus den chromhaltigen Verbundleiterplatten 6 ist somit nahezu ausgeschlossen. Die Leistungsfähigkeit des gesamten Hochtemperatur-Brennstoffzellenstapels 2 wird somit verbessert.

Auf der der Anode 14 der Elektrolyt-Elektroden-Einheit 9 zugewandten Oberfläche 18 der Verbundleiterplatte 6 wird kein Sauerstoff (O₂) als Betriebsmittel geführt, so daß es nicht zu unerwünschten Korrosionserscheinungen und zum Verdampfen von chromhaltigen Verbindungen aus der Verbundleiterplatte 6 kommen kann. Die Schicht 28 wird somit auf der Oberfläche 18 der Verbundleiterplatte 6 nicht benötigt.

## Patentansprüche

1. Hochtemperatur-Brennstoffzelle (4,5) mit wenigstens einer chromhaltigen Verbundleiterplatte (6), wobei die Verbundleiterplatte (6) auf der der Kathode (6) zugewandten Oberfläche (16) wenigstens teilweise eine Schicht (28) aufweist, **dadurch gekennzeichnet**, daß die Schicht (28) wenigstens eine erste und eine zweite Lage (30,32) umfaßt, wobei die erste, auf der Oberfläche (16) der Verbundleiterplatte (6) angeordnete Lage (30), Nickel (Ni) und die darüber angeordnete zweite Lage (32) Aluminium (Al) enthält.

2. Hochtemperatur-Brennstoffzelle (4,5) nach Anspruch 1, **dadurch gekennzeichnet**, daß die erste Lage (30) wenigstens 90 Gew.-% Nickel (Ni) enthält.

3. Hochtemperatur-Brennstoffzelle (4,5) nach Anspruch 1 oder 2, **dadurch gekennzeichnet**, daß die erste Lage (30) eine Dicke zwischen 10 und 100 µm besitzt.

4. Hochtemperatur-Brennstoffzelle (4,5) nach einem der vorhergehenden Ansprüche, **dadurch gekennzeichnet,** daß die zweite Lage (32) wenigstens 90 Gew.-% Aluminium (Al) enthält.

5. Hochtemperatur-Brennstoffzelle (4,5) nach einem der vorhergehenden Ansprüche, **dadurch gekennzeichnet,** daß die zweite Lage (32) eine Dicke zwischen 10 und 20 um besitzt.

6. Hochtemperatur-Brennstoffzelle (4,5) nach einem der vorhergehenden Ansprüche mit wenigstens zwei in der Oberfläche (16) parallel zueinander verlaufenden Kanälen (20), wobei jeweils zwei Kanäle (20) durch einen Steg (22) voneinander getrennt sind, **dadurch gekennzeichnet,** daß die Seitenwände (24) und die Böden (26) der Kanäle (20) mit der Schicht (28) versehen sind.

7. Hochtemperatur-Brennstoffzellenstapel (2) mit einer Anzahl von Hochtemperatur-Brennstoffzellen (4,5) nach einem der Ansprüche 1 bis 6.
